Europäisches Patentamt

European Patent Office

Office européen des brevets

(19)

(11) Publication number: **O 043 544 B1**

# EUROPEAN PATENT SPECIFICATION

(12)

(45) Date of publication of patent specification: **14.03.84**

(51) Int. Cl.³: **H 04 Q 3/70, H 04 M 3/64**

(21) Application number: **81105073.1**

(22) Date of filing: **01.07.81**

(54) **Method and apparatus for the automatic identification of the calling subscriber in step-by-step telephone exchanges.**

(30) Priority: **03.07.80 IT 6804680**

(43) Date of publication of application:
**13.01.82 Bulletin 82/2**

(45) Publication of the grant of the patent:
**14.03.84 Bulletin 84/11**

(84) Designated Contracting States:
**DE FR GB NL**

(56) References cited:
**US - A - 3 967 074**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Rosboch, Luciano**
**Via Moretta, 31**
**Turin (IT)**
Inventor: **van Veen, Wouter**
**Via Canonico Maffei, 191**
**Ceretta - Torino (IT)**

(74) Representative: **Riederer Freiherr von Paar zu Schönau, Anton**
**Freyung 615 Postfach 2664**
**D-8300 Landshut (DE)**

Courier Press, Leamington Spa, England.

# Method and apparatus for the automatic identification of the calling subscriber in step-by-step telephone exchanges

The present invention relates to electromechanical telephone exchanges, and more particularly it concerns a method and an apparatus for identifying the calling subscriber in step-by-step telephone exchanges.

It is known that presently a lot of electromechanical exchanges are equipped with processors which, upon receiving information represented by electrical criteria present on determined wires or devices, process them in real time in order to obtain i.a. the information necessary to offer the subscribers new services, such as documentation of the traffic carried out or barring of a number of services. Of course said information comprises also the identity of the calling party, which, should a barring be required, must be recognized before the beginning of the conversation, and preferably before the completion of the connection, as soon as the information recognized by the processor is sufficient to recognize the access request to a barred service.

For instance, in case of a subscriber for whom the direct distance dialling (which can be recognized by the first dialled digit or digits) is barred, the connection is not to continue after the first selection stage (s).

The information the processor requires to offer said services is present at the subscribers' line circuits. However, it would be complicated and expensive, due to the high number of sensors required, to extract from said line circuits and transfer to the processor the information looked for; advantageously therefore this information ought to be recognized by extracting the data downstream of a concentration stage.

A method of identifying the subscribers associated through a switching network is already known wherein a marking signal easy to distinguish from the normal signalling criteria is sent to a point of the connection, downstream of a concentration stage, and said marking signal is extracted at the two ends of the connection. An identification method of that type is disclosed for instance in German Patent No. 927 449, according to which an operator sends a marking signal consisting of a superpositive voltage, over a test wire downstream a line finder, and uses such a signal to actuate two warning lights in correspondance with the line circuits of the two interconnected subscribers.

This known method presents a number of disadvantages:—

the marking signal can be sent only after the completion of the connection and therefore the method cannot be used for barring certain services:

two party line subscribers cannot be distinguished;

the intervention of an operator is necessary to choose the connection the marking signal is to be sent to and to observe the warning lights associated with the subscribers;

a special wire is required for the test.

Further, a method and an apparatus for the automatic identification of calling subscribers in step-by-step telephone switching systems is known for instance from US—A—3 967 074. According to this prior art, an exchange in a switching center of the telephone direct distance dialing network, serving a plurality of remote telephone offices each serving in turn a plurality of telephone stations, identifies, in a first identification step and by sending a first identfication signal over the lines connecting the remote offices with said exchange, the office serving as station which has placed a direct distance dialed call, and, in a subsequent step and by sending a second identification signal, identifies the station in the office. These known method and apparatus, being applied in a switching center of the direct distance dialing network, can identify only the subscribers which place calls routed through this network, that is, they can identify only a reduced number of the calling subscribers.

These disadvantages are overcome by the method and apparatus according to the invention which allow the automatic recognition of the identity of all calling subscribers in the exchange, even in case of shared service (party line subscribers) without using a special test wire or establishing the connection to the called party.

The present invention provides a method of automatically identifying a calling subscriber in a step-by-step telephone exchange, in which an identification signal is sent to one out of a plurality of first exchange devices downstream of a concentration stage, and the presence of said signal is detected in correspondence with one out of a plurality of second exchange devices, said second device being permanently allotted to said subscriber and being connected for the call in progress to said first device, said signal being extracted from a wire connecting said first device to said second device as a consequence of the call, the invention being characterized in that said identification signal is sent to said first device upon recognition of its seizure and upon a command supplied by a processing system to which serial frames of logic signals are sent, which logic signals represent the state of some criteria, including the seizure, present in said first devices, said processing system generating other frames of logic signals representing criteria to be actuated in said first devices; in that moreover during the identification a high impedance to the passage of the identification signal is generated between each of said second devices and the respective wire so that the identification signal does not affect the devices themselves, and in that finally the wires from which the identification signals are to be extracted are cyclically scanned to form frames of analog samples that are each compared with at least a pair of thresholds defining a range within which the value of the identification signal falls, the results of said comparisons are inserted in frames of logic signals sent to the processing system and the command for sending the identification signal is removed when said signal is positively recognized.

It is also an object of the invention to provide apparatus for carrying out the method.

The features of the invention will clearly appear from the following description of some preferred embodiments thereof, shown in the annexed drawings in which:—

Fig. 1 shows a portion of a step-by-step telephone exchange equipped with the apparatus of the invention, for the case of a single identification voltage and of single line subscribers;

Fig. 2 is a diagram similar to Figure 1, in the case of party line subscribers;

Fig. 3 is a block diagram of the apparatus of the invention still in case of a single identification voltage;

Fig. 4 is a partial diagram of a variant, relating to the use of two identification voltages.

By way of example, in the following description reference is made to a step-by-step exchange with a linefinder concentration stage, which is supposed to carry out a 100:16 concentration. Furthermore it is supposed that the exchange is of a type in which signalling criteria chiefly consist of voltages negative with respect to earth. Thus a positive voltage can be used for the identification signal, said voltage being chosen upon considerations which will be expounded hereinafter.

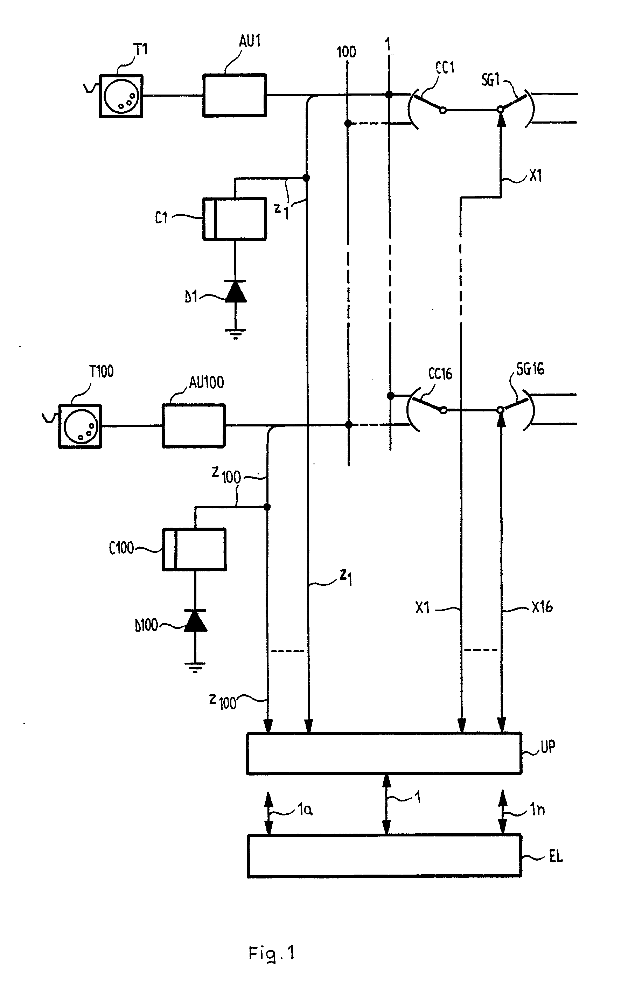

In Fig. 1 telephone sets T1 ... T100 schematically represent a group of subscribers, connected to their respective line circuits AU1 ... AU100, associated with the electromechanical subscribers' meters C1 ... C100, connected to their respective metering wires z1 ... z100; diodes D1 ... D100 in series with the meters are connected so as to let through towards the meters the current due to the metering pulses and not the current due to the positive identification voltage.

The 100 subscribers' line circuits are connected to 16 finders CC1 ... CC16, available to all subscribers and connected to 16 first group selectors SG1 ... SG16. The finders and the first group selectors are connected for instance by means of 4 wires, of which one is the metering wire (z) connected to the subscriber's meter and the others are the voice wires and the seizure wire.

A peripheral unit UP, designed to extract from and to send back to the exchange signalling criteria, is connected through connections X1 ... X16 to group selectors SG1 ... SG16. Through connections X1 ... X16, the peripheral unit UP and a synchronous serial line 1, a number of criteria present at selectors SG are sent to a processing system EL which processes them, e.g. for charge-documentation or service-restriction purposes; EL returns to the exchange, still through line 1, peripheral unit UP and connections X1 ... X16, other criteria as a result of the processings effected.

Among the criteria present on connections X1 ... X16 a criterion representing the seizure of a group selector and an identification criterion are of interest to the purpose of the present invention. The identification criterion is sent from UP to an element that in a group selector SG1 ... SG16 is connected to the metering wire and is extracted from said wire in correspondence with the subscriber's meter C1 ... C100. To this purpose also the metering wires are connected to the peripheral unit UP.

Furthermore, a criterion which can be used to distinguish which of two party-line subscribers has seized the line, is also extracted from the group selector.

Consequently the peripheral unit will comprise means designed to cyclically scan the wires of connections X1 ... X16 outgoing from the selectors to recognize the seizure thereof, means designed to send, upon command of processing system EL, the identification criterion on a wire of a connection X relating to a seized selector, and means designed to cyclically scan wires $z_1$ ... $z_{100}$ to recognize on one of them the identification voltage.

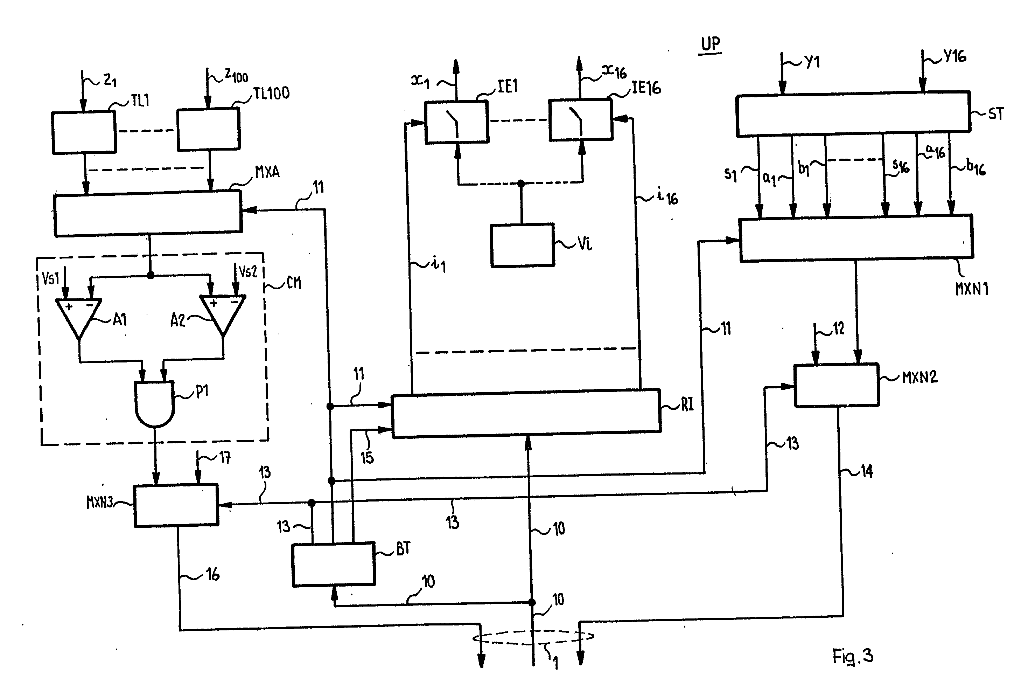

UP will also comprise means for serializing the signals coming from the exchange and parallelizing the signals sent to the exchange, as well as the circuits for bringing the signal level from the values present on the exchange wires to the logic levels necessary to the transmission on line 1 and vice versa. The structure of UP will be described in more detail in connection with Fig. 3. It is to be considered that even if from a conceptual point of view unit UP forms a whole, it can be constructed of two different parts, the one placed near the group selectors and the other near the subscribers' meters, so as to reduce to a minimum the length of wires connecting UP and the exchange devices.

Processing system EL can be of any known type, comprising in addition to the actual processor (e.g. a minicomputer), an interfacing system allowing the reception and transmission of synchronous serial frames even if the processor operates in an asynchronous way. Obviously, the processing system is to operate at such a speed that the time necessary to complete the identification is reasonable.

In particular that time must be such as to allow the identification of all the calling subscribers in the busy hours in an exchange, no matter how big it is, taking into account that an only identification at a time can be carried out, as will be explained hereinbelow, and that the identification is necessary to offer the service to the subscriber.

It is also to be stated that processing system EL is capable of servicing a plurality of units such as UP, each being connected to EL through its serial line 1a ... 1n. Should groups of mutually independent exchange devices be associated with these units, the phrase "an only identification at a time" can be referred to each unit UP.

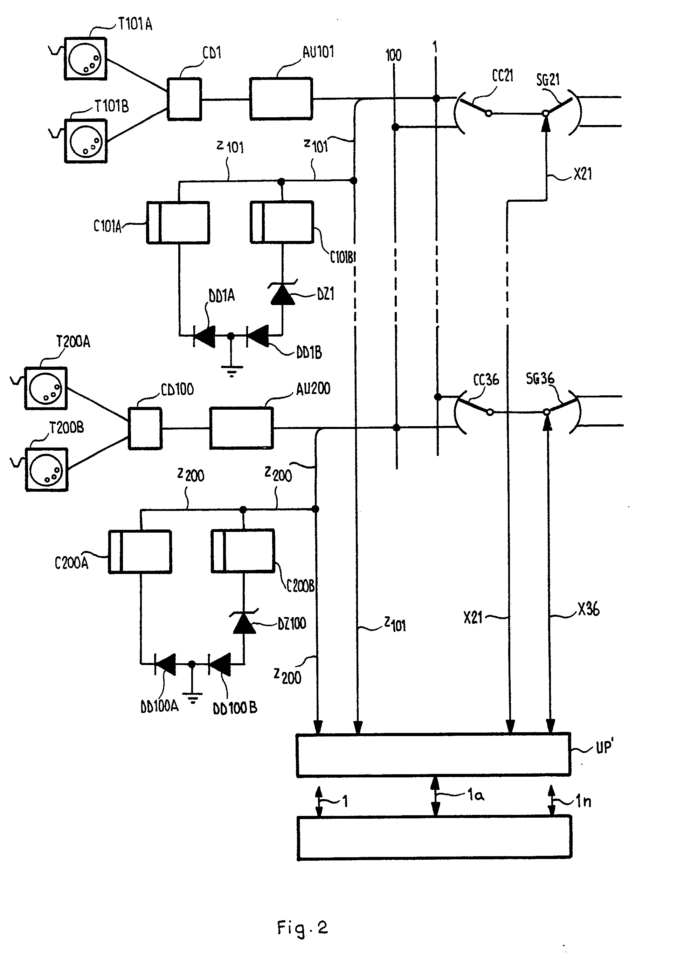

Fig. 2 shows another part of the same exchange, also comprising 16 finders CC21 ... CC36 and 16 group selectors SG21 ... SG36, connected to one hundred subscribers' line circuits AU101 ... AU200, which in this case are allotted to party line subscribers. Said subscribers are schematically represented by the pairs of telephone sets T101A, T101B ... T200A, T200B, and by privacy boxes CD1 ... CD100, and are associated with meters, C101A, C101B ... C200A, C200B.

The term "privacy box" is used to denote a device which prevents either party line subscriber from beginning a call when the other subscriber is using the telephone and from hearing what the other subscriber is saying.

Usually in an installation of this kind of metering pulses for the two party line subscribers consist of two voltage pulses having equal absolute value, but opposite sign, and therefore the two meters of each party line installation are associated with diodes DD1A, DD1B ... DD100A, DD100B which, in the arrangement shown in Fig. 2, let through the negative pulses towards the meter of subscriber A, and the positive pulses towards the meters of subscribers B.

Furthermore, a zener diode DZ1 ... DZ100, with zener voltage slightly higher than the identification voltage, has been inserted between one of diodes DD (in particular DD1B ... DD100B, since an identification criterion represented by a positive voltage has been assumed) and the meter associated with it. Thus the meter circuit presents a high impedance for the identification signal.

As in Fig. 1, metering wires $z_{101}$ ... $z_{200}$ (common to the two meters) are connected to peripheral unit UP', identical to UP, which is connected to the first group selectors SG21 ... SG36 through connections X21 ... X36 and to a processor EL through one of the connections 1a ... 1n (e.g. connection 1a).

In Fig. 3, unit UP comprises a number of sensors and level transducers, denoted as a whole by ST, which are connected to groups of wires Y1 ... Y16 coming from SG1 ... SG16 and supply at their outputs logic level signals indicating the presence or absence of a determined criterion. The drawing shows only output wires $s_1$, $a_1$, $b_1$ ... $s_{16}$, $a_{16}$, $b_{16}$; wires $s$ relate to the seizure of selectors SG1 ... SG16 and to the dialled digits, while wires $a$, $b$ carry the criterion identifying which of two party line subscribers A, B is connected to the selector.

Obviously this information is not required in case of single line subscribers; therefore, in case of a unit UP associated only with this kind of subscribers, the corresponding wires will not be used, even if they are provided in order to enable a single peripheral unit to service the two types of subscribers.

All the wires outgoing from ST are connected to the inputs of a first digital multiplexer MXN1 which, depending on select signals supplied by a time base BT through a connection 11, organizes into a serial frame the signals present on said wires. These select signals are generated by BT starting from synchronism signals present in the frame of signals coming from EL, which frame arrives at BT through connection 10.

A second digital multiplexer MXN2 receives at a first input said frame and at other inputs parity and control signals (shown by arrow 12) which are inserted into the frame at suitable instants, determined by time base BT (connection 13). Output 14 of MXN2, belonging to connection 1, transfers the complete frame to processor EL.

To transfer the signals towards the group selectors SG1 ... SG16 a bank of addressable latches RI is provided having data inputs connected to that wire 10 of line 1 which carries the frames emitted by the processing system, and a number of outputs equal to the number of criteria emitted by each device, multiplied by the number of exchange devices connected to unit UP (16 in the example described). The drawing shows only the outputs relating to the identification criterion which alone concern the invention. Wires $i_1$ ... $i_{16}$ connected to such outputs constitute each a control wire for as many electronic switches IE1 ... IE16, which when closed, connect wires x1 ... x16 of connections X1 ... X16 Fig. 1) designed to convey the identification criterion, to an identification voltage source Vi.

As known an addressable latch bank comprises a plurality of set-reset flip-flops and transfers the signals present at its data input to an output identified by suitable addressing signals, supplied by the time base BT; said addressing signals may be the signals used for the select of MXN1 (connection 11).

The time base sends also to RI through a wire 15 the timing signal identifying the instant which is best suited to the transfer of the input signal onto one of the wires $i_1$ ... $i_{16}$.

The addresses present on connection 11 are also supplied to an analog multiplexer MXA, whose inputs are connected through level transducers TL1 ... TL100, to wires $z_1$ ... $z_{100}$. The output of MXA is connected to the inverting input of a first high-gain amplifier A1, of which the non-inverting input is connected to a first threshold voltage Vs1, and to the non-inverting input of a second high-gain amplifier A2, whose inverting input is connected to a second threshold voltage Vs2, lower than Vs1. The use of high-gain amplifiers is necessary to allow operation under saturation conditions, i.e. such that only two voltage values, corresponding to input voltages above or below threshold respectively, are present at the output.

The values of the two voltages Vs1, Vs2 define a range comprising the identification voltage, as it appears on wires z, taking into account the tolerances and the attenuations introduced by the exchange devices. The two amplifiers A1, A2, together with a 2-input AND gate P1, connected to the outputs of the amplifiers, form a comparator CM; the comparator output signal will have at a certain instant logic value 1 when a voltage lying in that range is present on the input of MXA scanned at that instant. The output of comparator CM is connected to an input of a third digital multiplexer MXN3 which provides at its output 16 (belonging to connection 1) serial frames containing a time slot for each of wires $z_1 \ldots z_{100}$ (or $z_{101} \ldots z_{200}$) as well as a number of time slots for control or parity bits. These bits arrive at other inputs of MXN3, schematized by arrow 17, and are inserted in the frame at instants determined by time base BT. The switching of MXN3 is controlled by the signals present on connection 13.

As said the identification voltage Vi is chosen so as to be easy to distinguish from the other signalling criteria and especially from the metering pulses. For instance, in case of an exchange Siemens SMN2 (in which signalling criteria mainly consist of negative voltages) voltages of about −9V appear at the meters C1 ... C100 of the single line subscribers, as a consequence of metering pulse. Therefore, any positive voltage (ranging from a few volts, in order to avoid confusions with earth voltage, to the maximum values admitted for the exchange) could do for the identification.

In case of party line subscribers it is obviously desirable to use the same identification voltage as for single line subscribers. But in this case the metering pulses orginate a +9V voltage for one of the subscribers (subscriber B) while for the other subscriber the −9V voltage is still present. If zener diodes DZ1 ... DZ100 were not introduced, a positive identification voltage would cause a current flow into the winding of the meter of subscriber B, so that false metering are likely to occur. Due to the presence of the zener diode, the voltage present on wire z during the metering relating to a subscriber B, passes from +9V, to a value equal to +9V plus the zener voltage of the zener diode. A positive voltage (from a few volts on) can still be used, provided it is not higher than the zener voltage of diodes DZ.

In this way the current flow through the meter winding is avoided and no problems are encountered in generating the identification voltage.

Obviously the higher the zener voltage of diodes DZ1 ... DZ100, the wider the range in which the identification voltage can be chosen. An upper limit for the zener voltage of diodes DZ is set by the power dissipated as a consequence of the metering pulses; convenient values for the zener voltage and the identification voltage can be for instance some fifteen volts and some ten volts respectively. The threshold voltages Vs1, Vs2 could then differ from voltage Vi by a pair of volts; the range thus defined takes into account the tolerances of all the components.

The subscriber identification according to the present invention will now be described, first considering the case of a single line subscriber and then of a party line subscriber.

When a subscriber, e.g. T1 (Fig. 1) lifts the handset, a free finder, e.g. CC1, connects T1 to selector SG1. As a consequence of the seizure of SG1 a signal at logic level 1 appears on output wire $s_1$ of ST (Fig. 3) and the relevant information is sent to the processor through MXN1, MXN2 and connection 14.

At this stage the identification could even be started because the connection between AU1 and SG1 has already been set up, so that the metering wire is already connected to meter C1, and furthermore this wire is not used by the exchange during the whole selection phase. Preferably however the end of the first dialled digit (recognized through wire $s_1$) is waited for so as to avoid interventions to identify a subscriber who just lifts and replaces his handset.

After said digit has arrived, the processor sets to 1 the identification bit relevant to device SG1 in the serial frame sent to UP. This bit at 1, loaded into R1 upon command of time base BT, is transferred to wire $i_1$, causing electronic switch IE1 to close: as a consequence identification voltage $V_i$ is applied to wire $x_1$. This voltage propagates from SG1 (Fig. 1) towards CC1 and appears on the metering wire z1 of subscriber T1; being Vi positive diode D1 presents a high impedance towards ground and therefore voltage Vi propagates towards the peripheral unit UP and not towards meter C1.

UP periodically scans wires $z_1 \ldots z_{100}$ by means of MXA and the voltage samples picked UP are compared in CM with thresholds $Vs_1$, $Vs_2$; since Vi has been sent only to SG1, it will be present, at least theoretically, only on wire $z_1$; thus, the output of CM will be at 1 only in correspondence of the instant in which $z_i$ is sampled.

Therefore in the frame emitted by MXN3 on wire 16 towards the processor, among the time slots allotted to wires z, only that allotted to $z_i$ will contain a bit at 1 (still theoretically).

Of course the association between time slots and wires z is memorized in the processor, which therefore can immediately recognize the calling subscriber from the position in the frame of the bit at 1.

As a consequence of the occurred identification, in the immediately subsequent output frame the processor will set to 0 the identification bit sent to SG1: consequently IE1 opens and wire $z_1$ is no longer at voltage Vi. In addition the processor can take the necessary steps for charge documentation, for stopping the setting up of the connection, if the subscriber has requested a barred service (which is recognized for instance by the first dialled digits, which EL has received from SG1 through wires Y and s).

The identification circuit is then ready to process a new request.

In case of a party line subscriber, the operation is basically the same, with the only exception that the processor will receive from MXN1, MXN2 (Fig. 3) also the information relevant to whether subscriber A or subscriber B of a pair of party line subscribers, is to be identified. This information, as mentioned, is represented by the state of wires $a$, $b$; assuming that the calling subscriber is subscriber T101A and that this subscriber is connected to selector SG21, a logic 1 will be present on wire $a_1$ and a logic 0 on wire $b_1$.

As a consequence of the scanning of wires $z_{101}$ ... $z_{200}$ the identification voltage will be recognized on wire $z_{101}$; said voltage is sent to the processor and allows the identification of subcriber's line circuit AU101 (the individual subscriber is not identified in this step, as wire $z_{101}$ is shared by subscribers T101A, T101B).

Subscriber T101A will be fully identified by associating the information "subscriber's line circuit AU101" with the information "subscriber A", previously memorized.

As mentioned hereinbefore since the identification voltage has been sent to an only group selector, such voltage ought to be present on one only of the wires $z$ connected to UP and therefore the frame on connection 16 (Fig. 3) ought to comprise an only bit at 1. Actually, due to noises or in case of party line subscribers, to a metering pulse for a calling subscriber characterized by positive metering pulses (subscriber B) at a certain instant a voltage within the range from $Vs_2$ to $Vs_1$ can be present on one or more wires $z$ different from that being identified. If this instant is coincident with the scanning instant of the respective wire by MXA, the frame on connection 16 will comprise bits at 1 in more time slots allotted to wires $z$. To surely distinguish the true identification voltage from transient phenomena, more subsequent frames are to be examined before a decision can be taken; that is a sort of logic integration of the received bits is to be effected.

It is clear that, by using an only identification voltage Vi for the whole exchange, only one identification at a time can be effected, unless the subscribers are organized into closed groups, each associated with a unit like UP. Generally speaking, whatever the subscriber organization may be and under the assumptions that, for the purposes for which the exchange has been equipped with a processor, five criteria are picked up from the first group selectors SG and four criteria are returned thereto and that a unit UP every 16 first group selectors is provided, processor EL will be able to transmit and receive 128-bit frames, each having the usual 8 ms duration. Practical experiments have demonstrated that by taking into account the signal propagation time in the exchange, the above-mentioned logic integration and the operating times of the processing system (which depend also on whether the groups involved are open or closed), on an average some fifteen identifications per second can be effected without any difficulty by using an only identification voltage.

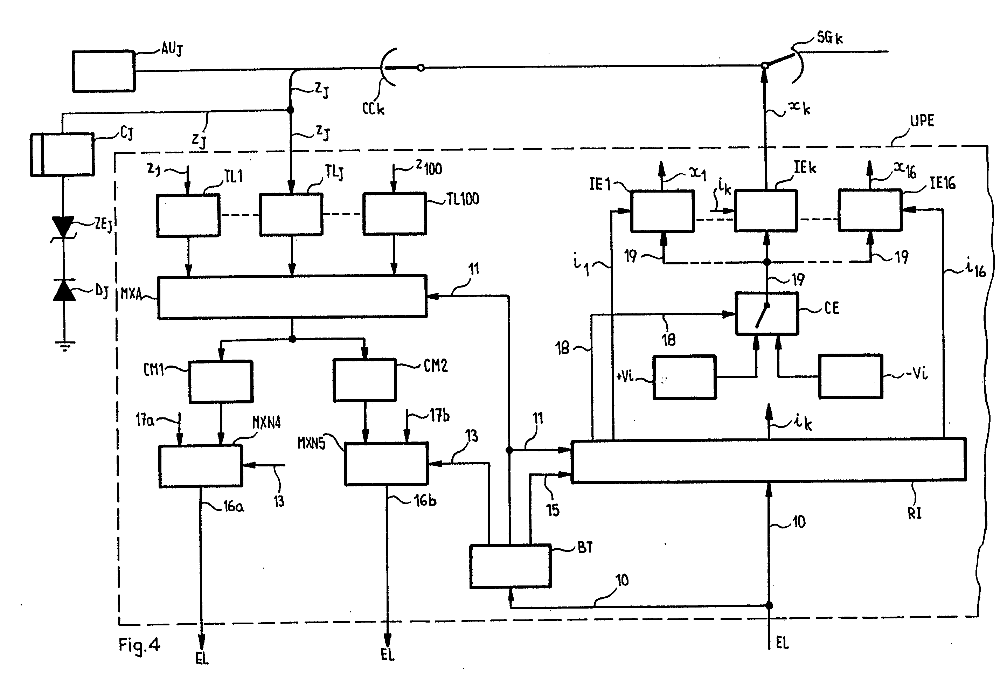

Should this identification capacity be insufficient with respect to the amount of traffic, two or more identification voltages might be used to carry out two or more identifications at a time, even when the exchange is not subdivided into closed groups. This possibility is shown in Fig. 4 with reference to the case in which the identification voltage has two equal and opposed values. The drawing illustrates an exemplary embodiment in which the choice of the identification voltage is binding on an entire group of 16 selectors SG: therefore, an only identification at a time is possible for the group, as in the previous case. This is not sensibly limiting as it is statistically improbable that two selectors in the same group of 16 might be seized during the time interval necessary for an identification to take place.

As to the peripheral unit, denoted by UPE, the drawing shows only the devices for sending the identification voltage to group selectors and for extracting the identification voltage from the metering wires, as only these devices require modifications due to the possibility of choice for the value of the identification voltage. Furthermore an only selector has been shown, which is supposed to be seized by a subscriber $Au_i$ through finder $CC_K$.

Electronic switches IE1 ... IEk ... IE16 are all connected to output 19 of a further electronic switch CE, which is able to connect said output to either voltage source +Vi or voltage source —Vi. The switching of CE is controlled by the signal present on a wire 18, connected for instance to the first output of latch RI, that is to the output on which there is present the first bit of the frames arriving from EL through connection 10. For instance, switch CE can transfer onto output 19 voltage +Vi, when that bit is 0 and voltage —Vi when the bit is 1. Obviously, for sake of a better safety, a pair of bits can be utilized which, once decoded will control the connection of wire 19 to either voltage source. The logic value of this bit or of these bits will be determined every time by the processor depending on which of the two sources is available. The identification bit will be still loaded on a wire $i$ at the suitable instant, so as to connect one of wires $x$ (in particular $x_k$) to wire 19 and therefore to the chosen voltage.

To allow also identifications with negative voltages a zener diode $ZE_j$ is inserted in correspondence with the subscriber's meter $C_j$, in series with diode $D_j$, whose functions remain the same; $ZE_j$ is connected so as to present a high impedance to the passage of negative voltages with absolute value lower than that of its zener voltage, as already described for zener diodes DZ1 ... DZ100 of Fig. 2.

It is clear that a zener diode connected as ZEj is to be inserted also in series with the meters of the subscribers which receive negative metering voltages.

To detect the identification voltage, the output of MXA is connected to two comparators CM1, CM2, identical to CM (Fig. 3), the one designed to recognize the positive voltages and the other designed to recognize the negative ones. Comparators CM1, CM2 are followed by their respective digital multiplexers MXN4, MXN5 which form on wires 16a, 16b, towards EL frames of logic signals into which the results of the comparison with positive and respectively negative voltages are inserted. Obviously, the comparator designed to recognize negative voltages will effect the comparison with thresholds $-Vs1$, $-Vs2$ defining a range including the negative identification voltage, as it appears on wire zj. Arrows 17a, 17b schematize the insertion of the control signals into the output frames of MXN4, MXN5.

The operation of this embodiment is similar to the one just described, the only difference being that at every identification switch CE will be controlled so as to connect wire $x_k$ to an identification voltage source not used by that unit UPE. It is worth bearing in mind that this embodiment is of interest if a group of 16 selectors is available to subscribers belonging to any group of hundred subscribers and if subscribers belonging to a same group of hundred subscribers can reach selectors belonging to different groups of 16.

Of course, identification wires $x_1$ ... $x_{16}$ could be connected independently of each other to either identification voltage source, so as to allow also the simultaneous identification of two subscribers connected to selectors pertaining to a same group; yet the advantages attainable in this way do not compensate for the greater complexity in the switch control, since as mentioned, it is very unlikely that an identification signal is to be sent to two selectors pertaining to the same group of 16 selectors.

As a further variant, a single signal frame from the comparators towards EL could be formed, by allotting two time slots to the identification bits.

**Claims**

1. A method of automatically identifying a calling subscriber in a step-by-step telephone exchange, in which an identification signal is sent to one out of a plurality of first exchange devices (SG1 ... SG16; SG21 ... SG36) downstream of a concentration stage (CC1 ... CC16; CC21 ... CC36), and the presence of said signal is detected in correspondence with one out of a plurality of second exchange devices (C1 ... C100; C101A, C101B ... C200A, C200B), said second device (C1 ... C200B) being permanently allotted to said subscriber (T1 ... T100; T101A, T101B ... T200A, T200B) and being connected for the call in progress to said first device (SG1 ... SG36), said signal being extracted from a wire (z1 ... z100; z101 ... z200) connecting said first device (SG1 ... SG36) to said second device (C1 ... C200B) as a consequence of the call, characterized in that said identification signal is sent to said first device (SG1 ... SG36) upon recognition of its seizure and upon a command supplied by a processing system (EL) to which serial frames of logic signals are sent, which logic signals represent the state of some criteria, including the seizure, present in said first devices (SG1 ... SG36), said processing system (EL) generating other frames of logic signals representing criteria to be actuated in said first devices (SG1 ... SG36); in that moreover during the identification a high impedance to the passage of the identification signal is generated between each of said second devices (C1 ... C200B) and the respective wire (z1 ... z200) so that the identification signal does not affect the devices themselves, and in that finally the wires (z1 ... z200) from which the identification signals are to be extracted are cyclically scanned to form frames of analog samples that are each compared with at least a pair of thresholds (Vs1 ... Vs2) defining a range within which the value of the identification signal falls, the results of said comparisons are inserted in frames of logic signals sent to the processing system (EL) and the command for sending the identification signal is removed when said signal is positively recognized.

2. Method according to claim 1, characterized in that said identification signal is sent to said first device (SG1 ... SG36), after it has received the first dialled digit.

3. Method according to claim 1, characterized in that said first exchange devices (SG1 ... SG36) are first group selectors, said second exchange devices (C1 ... C200B) are subscribers' meters and said wire (z1 ... z200) for extracting the identification signal is a metering wire.

4. Method according to claim 3, characterized in that to recognize the calling subscriber out of two party line subscribers (T101A, T101B ... T200A, T200B) associated with a same metering wire (z101 ... z200), the recognition of the presence of the identification signal is combined with an additional information represented by the state of one of the criteria extracted from said first device (SG21 ... SG36) and characterizing the seizure of the device (SG21 ... SG36) as due to either party line subscriber.

5. Method according to claims 1 to 4, characterized in that an only voltage (Vi) for the whole exchange is used as said identification signal.

6. Method according to claim 5, characterized in that said voltage (Vi) has opposite sign with respect to that of the metering pulses used in the exchange for single line subscribers (T1 ... T100) and for a first of two party line subscribers (T101A ... T200A), and the same sign as the metering pulses for the second party line subscriber (T101B ... T200B).

7. Method according to claim 6, characterized in that to extract said voltage (Vi) from said wire in case of a call coming from said second party line subscriber (T101B ... T200B), the subscriber meter (C101B ... C200B) is separated from the metering wire (z101 ... z200) during the identification by generating a high impedance to the passage of signals formed by voltages with absolute value lower than a limit value, which is constant and higher than the absolute value of the identification voltage (Vi).

8. Method according to any one of claims 1 to 4, characterized in that a voltage which can assume a pair of different values (+Vi, −Vi) is used for said identification signal.

9. Method according to claim 8, characterized in that the voltages (+Vi, −Vi) composing that pair have the same absolute values and opposite signs.

10. Method according to claims 3 and 9, characterized in that, to extract from said wire $(z_1 ... z_{100}, z_j)$ an identification voltage whose sign is equal to that of the metering pulses, the subscriber's meter (C1 ... C100, C101B ... C200B) is separated from the wire $(z_1 ... z_{100}, z_j)$ during the identification by generating a high impedance to the passage of signals represented by voltages having an absolute value lower than a limit value, which is constant and higher than the absolute value of the identification voltage.

11. Method according to claims 1, 9, 10, characterized in that each analog sample is compared with two pairs of values (+Vs1, +Vs2; −Vs1, −Vs2) defining two ranges respectively comprising one of the two possible values (+Vi, −Vi) of the identification voltage, and the results of the comparisons with the two different threshold pairs are inserted into different frames of logic signals sent to the processing system (EL).

12. Method according to claims 8 to 11, characterized in that said plurality of first devices (SG1 ... SG36) is subdivided into groups, and in that identification signals represented by different voltages are sent to first exchange devices belonging to different groups.

13. Apparatus for identifying a calling subscriber in a step-by-step telephone exchange, comprising at least a unit (UP; UP'; UPE) associated both with a plurality of first exchange devices (SG1 ... SG16; SG21 ... SG36), placed downstream of a concentration stage (CC1 ... CC16; CC21 ... CC36) to send to at least one of said first devices an identification signal, and with a plurality of second exchange devices (C1 ... C100; C101A, C101B ... C200A, C200B), each permanently allotted to a subscriber (T1 ... T100; T101A, T101B ... T200A, T200B) and connectable for the duration of a call to one of said first devices (SG1 ... SG16; SG21 ... SG36), to extract said identification signal from a wire (z1 ... z100; z101 ... z200) which extends from a first to a second exchange device as a consequence of said call, characterized in that the or each said unit (UP; UP'; UPE) comprises, in association with the first exchange devices (SG1 ... SG16; SG21 ... SG36) a plurality of electronic switches (IE1 ... IE16), whose number is the same as that of said first devices and which can be operated to connect at least one of said first devices to a source (Vi; +Vi, −Vi) of said identification signal, upon receiving a command consisting of a logic signal present in predetermined positions of a frame of logic signals sent by a processing system (EL) towards said first devices (SG1 ... SG16; SG21 ... SG36) and set to a predetermined logic value as a consequence of the recognition of the seizure of said device, said command being kept present till the recognition of the appearance of the identification signal on one of said wires $(z_1 ... z_{100}; z_{101} ... z_{200})$; and in that the or each said unit (UP; UP'; UPE) comprises in combination with said second devices: means (D1 ... D100; DZ1 ... DZ100; ZEj) to originate a high impedance between said wires $(z_1 ... z_{100}; z_{101} ... z_{200})$ and their associated second devices (C1 ... C100; C101A, C101B ... C200A, C200B) in presence of the identification signal; an analog multiplexer (MXA) designed to cyclically scan, under the control of a time base (BT), all said wires $(z_1 ... z_{100}; z_{101} ... z_{200})$ in order to compose frames of analog samples of these signals present on the wires; comparator means (CM; CM1, CM2), connected to the output of the analog multiplexer (MXA) to compare each of said analog samples with thresholds (Vs1, Vs2) defining at least a range of values in which the value of the identification signal lies, and to supply logic signals, whose values indicate the positive or negative result of the comparisons, and digital multiplexer means (MXN3; MXN4, MXN5) designed to insert said comparison results into serial frames of logic signals sent to the processing system.

14. Apparatus according to claim 13, characterized in that each one of said electronic switches (IE1 ... IE16) receives the actuation command through a control wire $(i_1 ... i_{16})$ connected to an output of an addressable latch bank $(R_i)$ which receives at the input the signal frame emitted by the processing system (EL) and presents at an output, identified by an addressing signal supplied by the time base (BT), the signal present at this instant at the input.

15. Apparatus according to claim 13, characterized in that said unit (UP; UP'; UPE) further comprises, in association with the first exchange devices (SG1 ... SG16; SG21 ...

SG36) means for extracting signalling criteria from said devices and sending frames of logic signals representing the states of said criteria, to the processing system.

16. Apparatus, according to claim 13 to 15, characterized in that said first and second exchange devices (SG1 ... SG16, C1 ... C100; SG21 ... SG36, C101A ... C200B) are organized into groups containing each a number of first devices and a greater number of second devices, each group being associated with one of said units (UP; UP'; UPE).

17. Apparatus according to claims 13 to 16, characterized in that said first exchange devices (SG1 ... SG16; SG21 ... SG36) are first group selectors, said second exchange devices (C1 ... C100; C101A ... C200B) are subscribers' meters and said wire ($z_1$ ... $z_{100}$; $z_{101}$ ... $z_{200}$) for the extraction of the identification signal is a metering wire.

18. Apparatus according to claims 13 to 17, characterized in that said sources of the identification signal is a voltage source generating a single identification signal for the whole exchange.

19. Apparatus according to claim 18, characterized in that said voltage source generates a voltage whose sign is opposite to that of the metering pulses utilized in the exchange for single line subscribers (T1 ... T100) and for a first of two party line subscribers (T101A ... T200A), and is equal to that of the metering pulses used for the second party line subscriber (T101B ... T200B).

20. Apparatus according to claims 13 to 19, characterized in that the means for generating a high impedance comprise a diode (D1 ... D100) in series with the meter (C1 ... C100) of each single line subscriber, and a zener diode (DZ1 ... DZ100) in series with the meter (C101B ... C200B) of those party line subscribers receiving metering pulses with the same sign of the identification voltage, said zener diode (DZ1 ... DZ100) having a zener voltage higher than the identification voltage and being connected so as to present said high impedance for voltages lower than zener voltage.

21. Apparatus according to claims 13 to 17, characterized in that said source of the identification signal comprises at least a pair of voltage sources (+Vi, −Vi) which generate voltages having the same absolute values and opposite signs.

22. Apparatus according to claims 13 and 21, characterized in that means designed to generate a high impedance comprise, for each subscriber, a zener diode (DZ1 ... DZ100; ZEj) in series with the meter (C101B ... C200B; Cj) and having a zener voltage whose absolute value is higher than the absolute value of said identification voltages, said zener diode being connected so as to present high impedance for voltages whose absolute value is lower than the zener voltage.

23. Apparatus according to claims 13, 21 and 22, characterized in that said comparator means comprise a first and a second comparators (CM1, CM2) which compare each sample outgoing from the analog multiplexer (MXA) respectively with a first pair of thresholds, defining a range comprising the positive identification voltage and with a second pair of thresholds defining a range comprising the negative identification voltage; and in that said digital multiplexer means comprise a first and a second digital multiplexer (MXN4, MXN5) connected respectively to the outputs of the first and second comparators (CM1, CM2) to insert into said frames of logic signals the results of the comparison with the first and the second pairs of thresholds, respectively.

24. Apparatus according to claims 13, 16 and 21, characterized in that the inputs of the electronic switches (IE1 ... IE16) associated with a group of first exchange devices (SG1 ... SG16; SG21 ... SG36) is connected to the output (19) of a further electronic switch (CE), which is controlled by at least one logic signal present at the beginning of each frame emitted by the processing system (EL) and is apt to connect to said output either identification voltage source.

**Revendications**

1. Procédé pour l'identification automatique d'un abonné appelant dans un central téléphonique pas à pas, suivant lequel l'on envoie un signal d'identification a un premier organe de central, choisi parmi une multiplicité d'organes (SG1 ... SG16; SG21 ... SG36), en aval d'un étage de concentration (CC1 ... CC16; CC21 ... CC36) et l'on détecte ledit signal en correspondance d'un second organe de central, qui fait partie d'une pluralité d'organes (C1 ... C100; C101A, C101B ... C200A, C200B), est assigné en permanence audit abonné (T1 ... T100; T101A, T101B ... T200A, T200B) et est connecté pour l'appel en cours audit premier organe (SG1 ... SG36), ledit signal étant saisi d'un fil (z1 ... z100; z101 ... z200) qui connecte le premier (SG1 ... SG36) et le second (C1 ... C200B) organe en conséquence de l'appel, caractérisé en ce que ledit signal d'identification est envoyé audit premier organe (SG1 ... SG36) lorsqu'on reconnaît la prise de celui-ci et d'après une commande fournie par un système de traitement (EL) qui reçoit des trammes sérielles de signaux logiques représentant l'état d'un certain nombre de critères; y compris la prise, présents dans lesdits premiers organes (SG1 ... SG36), et qui engendre d'autres trammes de signaux logiques représentant des critères à activer dans ledit premiers organes (SG1 ... SG36); en ce qu'en outre, pendant l'identification, on engendre entre chacun desdits seconds organes (C1 ... C200B) et le respectif fil (z1 ... z200), une impédance élevée pour le passage du signal d'identification de sorte qu'il n'affecte pas les organes; et enfin en ce que l'on explore cycliquement les fils (z1 ... z200) destinés à la saisie du signal d'identification pour former des trammes d'échantillons analogiques dont chacun est comparé avec au moins deux seuils (Vs1 ... Vs2) qui définissent une plage comprenant la valeur du signal d'identification, on insère les résultats desdites comparaisons dans des trames de signaux logiques envoyées au système de traitement (EL) et l'on enlève la commande d'envoi du signal d'identification lorsqu'on reconnaît sans doute ledit signal.

2. Procédé suivant la revendication 1, caractérisé en ce que ledit sgnal d'identification est envoyé audit premier organe (SG1 ... SG36) après que ce dernier a reçu le premier chiffre numéroté.

3. Procédé suivant la revendication 1, caractérisé en ce que lesdits premiers organes de central (SG1 ... SG36) sont des premiers sélecteurs de groupe, les seconds organes de central (C1 ... C200B) sont des compteurs d'abonné et ledit fil (z1 ... z200) pour la saisie du signal d'identification est un fil de comptage.

4. Procédé suivant la revendication 3, caractérisé en ce que pour reconnaître 1' abonné appelant entre deux abonnés (T101A, T101B ... T200A, T200B) qui partagent la même ligne et sont connectés au même fil de comptage (z101 ... z200), on associe la détection du signal d'identification à une informmation supplémentaire représentée par l'état d'un des critères saisis dudit premier organe (SG21 ... SG36), qui caractérisé la prise de l'organe (SG21 ... SG36) par le premier ou le second desdits deux abonnés avec ligne partagée.

5. Procédé suivant les revendications 1—4, caractérisé en ce que ledit signal d'identification est représenté par une tension (Vi) unique pour le central entier.

6. Procédé suivant la revendication 5, caractérisé en ce que le signe de ladite tension (Vi) est opposé à celui des impulsions de comptage employées dans le central pour les abonnés (T1 ... T100) dont la ligne est individuelle et pour le premier (T101A ... T200A) de deux abonnés avec ligne partagée, et le même signe des impulsions de comptage pour le second (T101B ... T200B) des deux abonnés avec ligne partagée.

7. Procédé suivant la revendication 6, caractérisé en ce que pour saisir ladite tension (Vi) dudit fil en cas d'appel provenant dudit second abonné (T101B ... T200B) avec ligne partagée le compteur (C101B ... C200B) de celui-ci est separé du fil de comptage (z101 ... z200), pendant l'identification, en engendrant une impédance élevée pour le passage de signaux représentés par des tension dont la valeur absolue est inférieure à une valeur limite, constante et supérieure à la valeur absolue de la tension d'identification (Vi).

8. Procédé suivant l'une quelconque des revendication 1 à 4, caractérisé en ce que ledit signal d'identification est représenté par une tensin qui peut prendre deux valeurs différentes (+Vi, —Vi).

9. Procédé suivant la revendication 8, caractérisé en ce que lesdites deux tensions (+Vi, —Vi) ont la même valeur absolue mais signe opposé.

10. Procédé suivant les revendications 3 et 9, caractérisé en ce que, pour saisir dudit fil (z1 ... z100; zj) une tension d'identification dont le signe est égal à celui des impulsions de comptage, le compteur d'abonné (C1 ... C100; C101B ... C200B) est séparé du fil (z1 ... z100; zj), pendant l'identification, en engendrant une impédance élévé pour signaux représentés par des tensions ayant une valeur absolue infériéure à une valeur limite, constante et supérieure à la valeur absolue de la tension d'identification.

11. Procédé suivant les revendications 1, 9, 10, caractérisé en ce que l'on compare chaque échantillon analogique avec deux paires de valeurs (+Vs1, +Vs2; —Vs1, —Vs2) qui définissent deux gammmes comprenant respectivement les deux valeurs (+Vi, —Vi) possibles pour la tension d'identification, et l'on insère les résultats des comparaisons avec les valeurs des deux paires en deux trames différentes de signaux logiques envoyées au dispositif de traitement (EL).

12. Procédé suivant les revendications 8 à 11, caractérisé en ce que lesdits premiers organes (SG1 ... SG36) sont organisés en groupes, et en ce qu'aux premiers organes de central qui appartiennent à des groupes différents on envoie des signaux d'identification représentés par des valeurs de tension différentes.

13. Dispositif pour l'identification d'un abonné appelant dans un central téléphonnique pas à pas, comprenant au moins une unité (UP, UP', UPE) associée à une pluralité de premiers organes de central (SG1 ... SG16; SG21 ... SG36) placés en aval d'un étage de concentration (CC1 ... CC16; CC21 ... CC36), pour envoyer dans au moins un desdits premiers organes un signal d'identification, ainsi qu'à une pluralité de seconds organes de central (C1 ... C100, C101A, C101B ... C200A, C200B), dont chacun est assigné en permanence à un abonné (T1 ... T100; T101A, T101B ... T200A, T200B) et peut être connecté pour un appel à l'un desdits premiers organes (SG1 ... SG16; SG21 ... SG36) , pour saisir ledit signal d'identification d'un fil ($z_1$ ... $z_{100}$; $z_{101}$ ... $z_{200}$) qui connecte un premier et un second organe de central en conséquence dudit appel; caractérisé en ce que ladite unité ou chacune desdites unités (UP; UP', UPE) comprend, en association aux premiers organes de central (SG1 ... SG16, SG21 ... SG36) une pluralité d'interrupteurs électroniques (IE1 ... IE16), dont le nombre est égal a celui des premiers organes et qui peuvent être actionnés pour connectere au moins un de ces premiers organes à une source (Vi; +Vi, —Vi) dudit signal d'identification d'après une commande constituée par un signal logique qui est présent en des positions prédéterminées d'une trame de signaux logiques envoyée par un dispositif de traitement (EL) vers lesdits premiers organes (SG1 ... SG16; SG21 ... SG36), et qui est mis à une valeur logique prédeterminée en conséquence de la détection de la prise dudit organe, ladite commande étant maintenue jusqu'à la détection du signal d'identification sur l'un desdits fils ($z_1$ ... $z_{100}$; $z_{101}$ ... $z_{200}$); et en ce que ladite unité ou chacune desdites unités (UP, UP'; UPE) comprend, en association auxdits seconds organes: des moyens (D1 ... D100; DZ1 ... DZ100; ZEj) pour engendrer une impédance élevée entre lesdits fils ($z_1$ ... $z_{100}$; $z_{101}$ ... $z_{200}$) et les organes respectifs (C1 ... $C_{100}$; $C_{101}$A, $C_{101}$B ... $C_{200}$A, $C_{200}$B) en présence du signal d'identification; un multiplexeur analogique (MXA) pour explorer cycliquement, d'après la commande d'une base de temps (BT), tous les dits fils ($z_1$ ... $z_{100}$; $z_{101}$ ... $z_{200}$ pour former des trames d'échantillons analogiques des signaux présents sur eux; un système de comparatuers (CM; CM1; CM2), connecté à la sorite du multiplexeur analogique (MXA), qui compare chacune desdits échantillons analogiques avec des seuils (Vs1, Vs2) définissant au moins une gamme de valeurs comprenant la valeur du signal d'identification, et qui émet des signaux logiques dont la valeur indique le résultat positif ou négatif des comparaisons, et un système de multiplexeurs numériques (MXN3, MXN4, MXN5) pour insérer les résultats desdites comparaisons dans des trames sérielles de signaux logiques envoyées au dispositif de traitement.

14. Dispositif suivant la revendication 13, caractérisé en ce que chacun desdits interrupteurs électroniques (IE1 ... IE16) reçoit le commande d'activation au moyen d'un fil de commande ($i_1$ ... $i_{16}$) connecté à la sortie d'un banc de registres adressables (RI) qui reçoit à l'entrée la trame des signaux émis du dispositif de traitement (EL) et présente sur une sortie identifiée par un signal d'adressage fourni par la base de temps (BT) le signal présent dans cet instant à l'entrée.

15. Dispositif suivant la revendication 13, caractérisé en ce que ladite unité (UP, UP', UPE) comprend aussi, en association aux premiers organes de central (SG1 ... SG16; SG21 ... SG36) des moyens pour saisir des critères de signalisation desdits organes et envoyer au dispositif de traitement des trames de signaux logiques représentant l'état desdits critères.

16. Dispositif suivant les revendications 13 à 15, caractérisé en ce que lesdits premiers et seconds organes de central (SG1 ... SG16, C1 ... C100; SG21 ... SG36, C101A ... C200B) sont organisés en groupes dont chacun comprend un nombre déterminé de premiers organes et un nombre plus grand de seconds organes, chaque groupe étant associé à une desdites unités (UP, UP'; UPE).

17. Dispositif suivant les revendications 13 à 16 caractérisé en ce que lesdits premiers organes de central (SG1 ... SG16, SG21 ... SG36) sont des premiers sélecteurs de groupe, lesdits seconds organes de central (C1 ... C100; C101A ... C200B) sont des compteurs d'abonné et ledit fil ($z_1$ ... $z_{100}$; $z_{101}$ ... $z_{200}$) pour la détection du signal d'identification est un fil de comptage.

18. Dispositif suivant les revendications 13 à 17, caractérisé en ce que ladite source du signal d'identification est une source de tension qui engendre un signal d'identification unique pour tout le central.

19. Dispositif suivant la revendication 18, caractérisé en ce que ladite source de tension engendre une tension dont la signe est opposé à celui des impulsions de comptage utilisées dans le central pour les abonnés à ligne individuelle (T1 ... T100) et pour un premier de deux abonnés qui partagent une même ligne (T101A ... T200A), et est égal à celui des impulsions de comptage utilisées pour le second des deux abonnés qui partagent la même ligne (T101B ... T200B).

20. Dispositif suivant les revendications 13 à 19, caractérisé en ce que les moyens pour engendrer une impédance élevée comprennent une diode (D1 ... D100) connectée en série au compteur (C1 ... C100) de chaque abonné avec ligne individuelle et une diode zener (DZ1 ... DZ100) connectée en série au compteur (C101B ... CB200B) des abonnés à ligne partagée qui reçoivent les impulsions de comptage ayant le même signe que la tension d'identification, ladite diode zener (DZ1 ... DZ100) ayant une tension de zener supérieure à ladite tension d'identification et étant connectée de façon à présenter ladite haute impédance pour des tensions inférieures à la tension de zener.

21. Dispositif suivant les revendications de 13 à 17, caractérisé en ce que ladite source du signal d'identification comprend au moins deux sources de tension (+Vi, −Vi) qui engendrent des tensions ayant le même valeur absolue et signe opposé.

22. Dispositif suivant les revendications 13 et 21, caractérisé en ce que les moyens pour engendrer une haute impédance comprennent, pour chaque abonné, une diode zener (DZ1 ... DZ100, ZEj) connectée en série au compteur (C101B ... C200B; Cj) et ayant tension de zener qui est supérieure en valeur absolue à la valeur absolue desdites tensions d'identification, la dite diode zener étant connectée de façon à présenter une haute impédance pour des tensions moins élevées en valeur absolue que la tension de zener.

23. Dispositif suivant les revendications 13, 21 et 22, caractérisé en ce que ledit système de comparateurs comprend un premier et un second comparateur (CM1, CM2) qui comparent chaque échantillon sortant du multiplexeur analogique (MXA) respectivement avec une première paire de seuils, qui définissent une gamme comprenant la tension d'identification positive, et avec une second paire de seuils, qui définissent une gamme comprenant la tension d'identification négative, et caractérisé de même en ce que ledit système de multiplexeurs numériques comprend un premier et un second multiplexeurs numériques (MXN4, MXN5) connectés respectivement à la sortie du premier et du second comparateur (CM1, CM2) pour insérer dans lesdites trames de signaux logiques respectivement les résultats des comparaisons avec la première et la second paire de seuils.

24. Dispositif suivant les revendications 13, 16, et 21, caractérisé en ce que l'entrée des interrupterus électroniques (IE1 ... IE16) associés à un groupe de premiers organes de central (SG1 ...; SG16; SG21 ... SG36) est connecté à la sortie (19) d'un commutateur électronique ultérieur (CE) qui est commandé par au moins un signal logique présent au début de chaque tramme émise par le dispositif de traitement de données (EL) et est apte à connecter à ladite sortie l'une ou l'autre desdites sources de tension d'identification (+Vi, −Vi).

## Patentansprüche

1. Verfahren zur automatischen Feststellung des anrufenden Teilnehmers in einer schrittschaltenden Fernsprechvermittlung, bei dem man ein Identifizierungssignal an eine aus einer Mehrzahl erster Vermittlungsvorrichtungen (SG1, ..., SG16; SG21, ..., SG36) ausgewählte Vorrichtung sendet, die in Nachrichtenflußrichtung hinter einer Konzentrationsstufe (CC1, ..., CC16; CC21, ..., CC36) liegen, und das Vorhandensein dieses Signals entsprechend einer aus einer Mehrzahl von zweiten Vermittlungsvorrichtungen (C1, ..., C100; C101A, C101B, ..., C200A, ..., C200B) ausgewählten Vorrichtung feststellt, wobei man die zweite Vorrichtung (C1, ..., C200B) ständig diesem Teilnehmer (T1, ..., T100; T101A, T101B, ..., T220A, T200B) zuordnet und während des ablaufenden Anrufs mit der ersten Vorrichtung (SG1, ..., SG36) verbunden hält, und wobei das Signal von einem Leiter (z1, ..., z100; z101, ..., z200) abgenommen wird, der die erste Vorrichtung (SG1, ..., SG36) als Folge des Anrufs mit der zweiten Vorrichtung (C1, ..., C200B) verbindet, dadurch gekennzeichnet, daß das Identifizierungssignal an die erste Vorrichtung (SG1, ..., SG36) bei Erkennung von deren Belegung und auf einen von einem Verarbeitungssystem (EL), an das serielle Rahmen logischer Signale gesendet werden, abgegebenen Befehl hin gesendet wird, wobei diese logischen Signale den Zustant einiger Kriterien einschließlich der in den ersten Vorrichtungen (SG1, ..., SG36) vorliegenden Belegung wiedergeben und das Verarbeitungssystem (EL) weitere Rahmen logischer Signale erzeugt, die in den ersten Vorrichtungen (SG1, ..., SG36) auszuführende Kriterien darstellen; daß weiterhin während der Identifizierung zwischen jeder der zweiten Vorrichtungen (C1, ..., C200B) und dem betreffenden Leiter (z1, ..., z200) ein hoher Widerstand gegen den Durchtritt des Identifizierungssignals erzeugt wird, so daß das Identifizierungssignal die Vorrichtungen selbst nicht beeinflußt; und daß schließlich die Leiter (z1, ..., z200), von denen die Identifizierungssignale abzunehmen sind, zyklisch zur Bildung von Rahmen analoger Abtastwerte abgetastet werden, die jeweils mit wenigstens zwei Schwellen (Vs1, ..., Vs2) verglichen werden, die einen Bereich begrenzen, innerhalb dessen der Wert des Identifizierungssignals fällt, und die Ergebnisse dieser Vergleiche in Rahmen logischer Signale eingesetzt werden, die an das Verarbeitungssystem (EL) gesendet werden, und der Befehl zum Senden des Identifizierungssignals zurückgezogen wird, wenn dieses Signal sicher erkannt ist.

2. Verfahren nach Anspruch 1, dadurch gekennzeichnet, daß das Identifizierungssignal an die erste Vorrichtung (SG1, ..., SG36) gesendet wird, nachdem sie die erste gewählte Ziffer empfangen hat.

3. Verfahren nach Anspruch 1, dadurch gekennzeichnet, daß die ersten Vermittlungsvorrichtungen (SG1, ..., SG36) erste Gruppenwähler sind, die zweiten Vermittlungsvorrichtungen (C1, ..., C200B) Teilnehmerzähler sind und der Leiter (z1, ..., z200) zum Abnehmen des Identifizierungssignals ein Zählerleiter ist.

4. Verfahren nach Anspruch 3, dadurch gekennzeichnet, daß zum Erkennen des rufenden Teilnehmers unter zwei mit einer Gemeinschaftsleitung versorgten Teilnehmern (T101A, T101B, ..., T200A, T200B), die an einen gemeinsamen Zählerleiter (z101, ..., z200) angeschlossen sind, das Erkennen des Vorliegens des Identifizierungssignals mit einer zusätzlichen Information kombiniert wird, die vom Zustand eines der von der ersten Vorrichtung (SG21, ..., SG36) abgenommenen Kriterien dargestellt wird und die Belegung der Vorrichtung (SG21, ..., SG36) durch einen der beiden durch die Gemeinschaftsleitung versorgten Teilnehmer kennzeichnet.

5. Verfahren nach den Ansprüchen 1 bis 4, dadurch gekennzeichnet, daß für die gesamte Vermittlungsstelle eine einzige Spannung (Vi) als Identifizierungssignal verwendet wird.

6. Verfahren nach Anspruch 5, dadurch gekennzeichnet, daß die Spannung (Vi) entgegengesetztes Vorzeichen im Vergleich zu demjenigen der Zählerimpulse hat, die in der Vermittlungsstelle für Einzelleitungsteilnehmer (T1, ..., T100) und für einen ersten von zwei über eine Gemeinschaftsleitung versorgten Teilnehmer (T101A, ..., T200A) verwendet werden, und das selbe Vorzeichen wie die Zählerimpulse für den zweiten der von der Gemeinschaftsleitung versorgten Teilnehmer (T10B, ..., T200B) hat.

7. Verfahren nach Anspruch 6, dadurch gekennzeichnet, daß zum Abnehmen dieser Spannung (Vi) vom Leiter im Fall eines vom zweiten über die Gemeinschaftsleitung versorgten Teilnehmer (T101B, ..., T200B) kommenden Anrufs der Teilnehmerzähler (C101B, ..., C200B) vom Zählerleiter (z101, ..., z200) während der Identifizierung abgetrennt wird, indem gegen den Durchtritt von durch Spannungen mit einem Absolutwert, der niedriger liegt als ein Grenzwert, welcher konstant und höher als der Absolutwert der Identifizierungsspannung (Vi) ist, gebildete Signale ein hoher Widerstand erzeugt wird.

8. Verfahren nach einem der Ansprüche 1 bis 4, dadurch gekennzeichnet, daß als Identifizierungssignal eine Spannung verwendet wird, die zwei unterschiedliche (+Vi, —Vi) annehmen kann.

9. Verfahren nach Anspruch 8, dadurch gekennzeichnet, daß diese beiden Spannungen (+Vi, —Vi) gleichen Absolutwert und entgegengesetztes Vorzeichen aufweisen.

10. Verfahren nach den Ansprüchen 3 und 9, dadurch gekennzeichnet, daß zum Abnehmen eine Identifizierungsspannung, deren Vorzeichen gleich dem der Zählerimpulse ist, vom Leiter ($z_1$, ..., $z_{100}$, $z_j$) der Zähler (C1, ..., C100; C101B, ..., C200B) des Teilnehmers während der Identifizierung vom Leiter ($z_1$, ..., $z_{100}$, $z_j$) abgetrennt wird, indem gegen den Durchtritt von durch Spannungen mit einem Absolutwert, der niedriger liegt als ein Grenzwert, welcher konstant und höher als der Absolutwert der Identifizierungsspannung ist, gebildeten Signalen ein hoher Widerstand erzeugt wird.

11. Verfahren nach den Ansprüchen 1, 9 und 10, dadurch gekennzeichnet, daß jeder der analogen Abtastwerte mit zwei Wertepaaren (+Vs1, +Vs2; —Vs1, —Vs2) verglichen wird, die zwei Bereiche begrenzen, welche jeweils einen der beiden möglichen Werte (+Vi, —Vi) der Identifizierungsspannung umfassen, und daß die Ergebnisse der Vergleiche mit den beiden verschiedenen Schwellenpaaren in unterschiedliche Rahmen logischer Signale, die zum Verarbeitungssystem (EL) gesendet werden, eingesetzt werden.

12. Verfahren nach den Ansprüchen 8 bis 11, dadurch gekennzeichnet, daß die ersten Vorrichtungen (SG1, ..., SG36) in Gruppen unterteilt sind und daß durch unterschiedliche Spannungen dargestellte Identifizierungssignale zu ersten Vermittlungsvorrichtungen, die zu verschiedenen Gruppen gehören, gesendet werden.

13. Vorrichtung zur Feststellung des anrufenden Teilnehmers in einer schrittschaltenden Fernsprechvermittlung, mit wenigstens einer Einheit (UP; UP'; UPE), die sowohl einer Mehrzahl erster Vermittlungsvorrichtungen (SG1, ..., SG16; SG21, ..., SG36), die in Nachrichtenflußrichtung hinter einer Konzentrationsstufe (CC1, ..., CC16; CC21, ..., CC36) angeordnet sind, um an wenigstens eine der ersten Vorrichtungen ein Identifizierungssignal zu senden, als auch einer Mehrzahl zweiter Vermittlungsvorrichtungen (C1, ..., C100; C101A, C101Bm ..., C200A, C200B), von denen jede ständig einem Teilnehmer (T1, ..., T100; T101A, T101B, ..., T200A T200B) zugeordnet und für die Dauer eines Anrufs mit einer der ersten Vorrichtungen (SG1, ..., SG16; SG21, ..., SG36) verbindbar ist, zum Abnehmen des Identifizierungssignals von einem Leiter ($z_1$, ..., $z_{100}$; $z_{101}$, ..., $z_{200}$), der als Folge des Anrufs von einer der ersten zu einer der zweiten Vermittlungsvorrichtungen verläuft, zugeordnet ist, dadurch gekennzeichnet, daß die Einheit oder jede der Einheiten (UP; UP'; UPE) in Zuordnung zu den ersten Vermittlungsvorrichtungen (SG1, ..., SG16; SG21, ..., SG36) eine Mehrzahl elektronischer Schalter (IE1, ..., IE16) umfaßt, deren Anzahl gleich der der ersten Vorrichtungen ist und die auf Empfang eines Befehls zum Verbinden von wenigstens einer der ersten Vorrichtungen mit einer Quelle (Vi; +Vi, —Vi) des Identifizierungssignals betätigbar sind, wobei der Befehl aus einem logischen Signal besteht, das an gegebenen Positionen eines Rahmens logischer Signale vorhanden ist, der von einem Verarbeitungssystem (EL) zu den ersten Vorrichtungen (SG1, ..., SG16; SG21, ..., SG36) gesendet wird, und als Folge der Erkennung der Belegung der Vorrichtung auf einen gegebenen logischen Wert gesetzt ist, und wobei der Befehl gegenwärtig gehalten wird bis zum Erkennen des Auftretens des Identifizierungssignals an einem der Leiter ($z_1$, ..., $z_{100}$; $z_{101}$, ..., $z_{200}$); und daß die Einheit oder jede der Einheiten (UP; UP'; UPE) in Kombination mit den zweiten Vorrichtungen folgende Einzelschaltungen umfaßt: Einrichtungen (D1, ..., D100; DZ1, ..., DZ100; ZEj) zum Erzeugen eines hohen Widerstands zwischen den Leitern ($z_1$, ..., $z_{100}$; $z_{101}$, ..., $z_{200}$) und ihren zugeordneten zweiten Vorrichtungen (C1, ..., C100; C101A, C101B, ..., C200A, C200B) bei Vorliegen des Identifizierungssignals; einen analogen Multiplexer (MXA), der gemäß seiner Schaltung unter Steuerung durch einen Zeitgeber (BT) zyklisch alle die Leiter ($z_1$, ..., $z_{100}$; $z_{101}$, ..., $z_{200}$) abtastet, um Rahmen analoger Abtastwerte der auf den Leitern vorhandenen Signale zusammenzusetzen; Komparatoreinrichtungen (CM; CM1, CM2), die mit dem Ausgang des analogen Multiplexers (MXA) verbunden sind, um jeden der analogen Abtastwerte mit Schwellen (Vs1, Vs2) zu vergleichen, die wenigstens einen Wertebereich begrenzen, in welchem der Wert des Identifizierungssignals liegt, und um logische Signale zu liefern, deren Wert das positive oder negative Ergebnis der Vergleiche anzeigt; sowie digitale Multiplexereinrichtungen (MXN3; MXN4, MXN5), die die Vergleichsergebnisse in serielle Rahmen logischer Signale, die zum Verarbeitungssystem gesendet werden, einsetzen.

14. Vorrichtung nach Anspruch 13, dadurch gekennzeichnet, daß jeder der elektronischen Schalter (IE1, ..., IE16) den Betätigungsbefehl

über eine Steuerleiter ($i_1$, ..., $i_{16}$) empfängt, der mit dem Ausgang einer adressierbaren Klinkenbank (RE) verbunden ist, die eingangsseitig den vom Verarbeitungssystem (EL) abgegebenen Signalrahmen empfängt und ausgangsseitig, identifiziert durch ein vom Zeitgeber (BT) geliefertes Adressensignal, das zu diesem Zeitpunkt am Eingang liegende Signal abgibt.

15. Vorrichtung nach Anspruch 13, dadurch gekennzeichnet, daß die Einheit (UP; UP'; UPE) weiterhin in Zuordnung zu den ersten Vermittlungsvorrichtungen (SG1, ..., SG16; SG21, ..., SG36) Einrichtungen zum Extrahieren von Signalisierungskriterien von den Vorrichtungen und zum Senden von Rahmen logischer Signale, die die Zustände der Kriterien wiedergeben, an das Verarbeitungssystem umfaßt.

16. Vorrichtung nach den Ansprüchen 13 bis 15, dadurch gekennzeichnet, daß die ersten und die zweiten Vermittlungsvorrichtungen (SG1, ..., SG16, C1, ..., C100; SG21, ..., SG36, C101A, ..., C200B) in Gruppen organisiert sind, von denen jede eine Anzahl der ersten Vorrichtungen und eine größere Anzahl der zweiten Vorrichtungen enthält und von denen jede einer der Einheiten (UP; UP'; UPE) zugeordent ist.

17. Vorrichtung nach den Ansprüchen 13 bis 16, dadurch gekennzeichnet, daß die ersten Vermittlungsvorrichtungen (SG1, ..., SG16; SG21, ..., SG36) erste Gruppenwähler sind, die zweiten Vermittlungsvorrichtungen (C1, ..., C100; C101A, ..., C200B) Teilnehmerzähler sind und der Leiter ($z_1$, ..., $z_{100}$; $z_{101}$, ..., $z_{200}$) für das Abnehmen des Identifizierungssignals ein Zählerleiter ist.

18. Vorrichtung nach den Ansprüchen 13 bis 17, dadurch gekennzeichnet, daß die Quelle des Identifizierungssignals eine Spannungsquelle ist, die ein einziges Identifizierungssignal für die gesamte Vermittlungsstelle erzeugt.

19. Vorrichtung nach Anspruch 18, dadurch gekennzeichnet, daß die Spannungsquelle eine Spannung erzeugt, deren Vorzeichen entgegengesetzt dem der Zählerimpulse ist, die in der Vermittlung für Einzelleiterteilnehmer (T1, ..., T100) und für den ersten von zwei über eine Gemeinschaftsleitung angeschlossenen Teilnehmern (T101A, ..., T200A) verwendet werden, und gleich dem der Zählerimpulse ist, die für den zweiten über Gemeinschaftsleitung angeschlossenen Teilnehmer (T101B, ..., T200B) verwendet werden.

20. Vorrichtung nach den Ansprüchen 13 bis 19, dadurch gekennzeichnet, daß zu den Einrichtungen zum Erzeugen eines hohen Widerstands eine Diode (D1, ..., D100) in Reihe mit dem Zähler (C1, ..., C100) jedes über eine Einzelleitung verfügenden Teilnehmers und eine Zenerdiode (DZ1, ..., DZ100) in Reihe mit dem Zähler (C101B, ..., C200B) derjenigen Gemein-schaftsleitungs-Teilnehmer, die die Zähler-impulse mit dem gleichen Vorzeichen wie die Identifizierungsspannung empfangen, gehören, wobei die Zenerdiode (DZ1, ..., DZ100) eine Zenerspannung aufweist, die höher ist als die Identifizierungsspannung, und so angeschlossen ist, daß sie für unter der Zenerspannung liegende Spannungen den hohen Widerstand bietet.

21. Vorrichtung nach den Ansprüchen 13 bis 17, dadurch gekennzeichnet, daß die Quelle des Identifizierungssignals wenigstens zwei Spannungsquellen (+Vi, −Vi) umfaßt, die Span-nungen gleichen Absolutwerts und entgegen-gesetzten Vorzeichens erzeugen.

22. Vorrichtung nach den Ansprüchen 13 und 21, dadurch gekennzeichnet, daß zu den Einrichtungen zum Erzeugen eines hohen Widerstands für jeden Teilnehmer eine Zenerdiode (DZ1, ..., DZ100; ZEj) in Reihe mit dem Zähler (C101B, ..., C200B; Cj) und mit einer Zenerspannung, deren Absolutwert höher ist als der Absolutwert der Identifizierungsspannung, gehört, wobei die Zenerdiode so angeschlossen ist, daß sie für Spannungen, deren Absolutwert niedriger als die Zenerspannung ist, den hohen Widerstand bietet.

23. Vorrichtung nach den Ansprüchen 13, 21 und 22, dadurch gekennzeichnet, daß die Komparatoreinrichtung einen ersten Komparator (CM1) und einen zweiten Komparator (CM2) umfaßt, die jeden vom analogen Multiplexer (MXA) ausgehenden Abtastwert jeweils mit einem ersten Schwellenpaar vergleichen, das einen die positive Identifizierungsspannung enthaltenden Bereich begrenzt, bzw. mit einem zweiten Schwellenpaar, das eine die negative Identifizierungsspannung enthaltenden Bereich begrenzt; und daß die digitale Multiplexereinrichtung einen ersten digitalen Multiplexer (MXN4) und einen zweiten digitalen Multiplexer (MXN5) umfaßt, die mit den Ausgängen des ersten Komparators (CM1) bzw. des zweiten Komparators (CM2) verbunden sind, zum Einsetzen der Vergleichsergebnisse mit dem ersten bzw. dem zweiten Schwellenpaar in die Rahmen der logischen Signale.

24. Vorrichtung nach den Ansprüchen 13, 16 und 21, dadurch gekennzeichnet, daß die Eingänge der elektronischen Schalter (IE1, ..., IE16), die einer Gruppe der ersten Vermittlungsvorrichtungen (SG1, ..., SG16; SG21, ..., SG36) zugeordnet sind, it dem Ausgang (19) eines weiteren elektronischen Schalters (CE) verbunden sind, der von wenigstens einem logischen Signal gesteuert wird, das zu Beginn jedes vom Verarbeitungssystem (EL) abgegebenen Rahmens vorliegt, und mit seinem Aus-gang eine der beiden Identifizierungsspan-nungsquellen verbindet.

Fig.1

1

Fig. 2

Fig. 3

Fig.4

4